# FASCICULE DE BREVET EUROPEEN

(11) **EP 0 896 339 B1**
(45) Date de publication et mention de la délivrance du brevet: **06.11.2002**
(21) Numéro de dépôt: 98401995.0
(22) Date de dépôt: 05.08.1998
(51) Int. Cl.: G21C 19/07, G21C 19/40

(54) **Procédé de rénovation d'un râtelier de stockage d'assemblages de combustible nucléaire**
Verfahren zum Wiederherstellen eines Lagergestells für Kernbrennstabbündel
Method for refurbishing a nuclear fuel assembly storage rack

(30) Priorité: 07.08.1997 FR 9710136
(43) Date de publication de la demande: 10.02.1999
(73) Titulaire: ATEA INDUSTRIES, 44470 Nantes Carquefou Cedex (FR)
(72) Inventeur: Kopecky, Bernard, 44300 Nantes (FR); Souchet, Jean-Paul, 44470 Carquefou (FR)
(74) Mandataire: Des Termes, Monique

(56) Documents cités:
- DE-C- 3 702 250
- FR-A- 2 357 038
- FR-A- 2 404 284
- FR-A- 2 709 995
- PATENT ABSTRACTS OF JAPAN vol. 095, no. 006, 31 juillet 1995 & JP 07 084094 A (KAWASAKI HEAVY IND LTD), 31 mars 1995
- DATABASE WPI Section Ch, Week 8519 Derwent Publications Ltd., London, GB; Class K05, AN 85-112875 XP002080847 & JP 60 053891 A (HITACHI LTD) , 27 mars 1985
- PATENT ABSTRACTS OF JAPAN vol. 097, no. 008, 29 août 1997 & JP 09 101391 A (MITSUBISHI HEAVY IND LTD), 15 avril 1997

## Description

### Domaine technique

L'invention concerne un procédé conçu pour assurer la rénovation d'un râtelier de stockage d'assemblages de combustible nucléaire.

L'invention s'applique en particulier aux râteliers de stockage dans lesquels un matériau neutrophage est placé entre les parois assurant la séparation entre les logements du râtelier et des tôles rapportées par soudure sur ces parois.

### Etat de la technique

Dans l'industrie nucléaire, on a coutume de stocker les assemblages de combustible nucléaire dans des râteliers de stockage placés dans des piscines dans lesquels circule de l'eau de refroidissement.

De telles installations reçoivent, soit des assemblages de combustible nucléaire neufs, soit des assemblages de combustible nucléaire préalablement irradiés dans le coeur d'un réacteur nucléaire. Elles se trouvent aussi bien sur le site même des réacteurs que sur d'autres sites tels que des usines de retraitement.

Les râteliers de stockage comprennent une structure rigide, qui peut être réalisée de différentes manières, de façon à délimiter un certain nombre de logements juxtaposés, dont l'axe longitudinal est orienté verticalement. Chacun des logements, aussi appelé "alvéole", est prévu pour recevoir un assemblage de combustible nucléaire. A cet effet, la section des logements est comparable à celle des assemblages, c'est-à-dire généralement carrée.

La structure rigide des râteliers de stockage peut être réalisée de différentes manières. Ainsi, les cloisons délimitant les logements peuvent être obtenues par exemple, soit en assemblant en quinconce des tubes de section carrée, à l'aide de pattes soudées, soit en assemblant par soudure des plaques parallèles orientées selon deux directions orthogonales.

Quelle que soit la technique utilisée pour réaliser la structure rigide du râtelier, il est d'usage d'équiper les cloisons séparant les logements d'un matériau neutrophage pouvant se présenter sous des formes diverses. Ce matériau neutrophage a pour fonction d'absorber les neutrons émis par la matière fissile contenue dans les assemblages de combustible nucléaire. Cela permet de réduire à une valeur minimale la distance séparant deux logements voisins. Le nombre des assemblages de combustible nucléaire susceptibles d'être stockés dans une piscine de dimensions données peut ainsi être optimisé.

L'une des techniques connues pour intégrer un matériau neutrophage dans les cloisons séparant le râtelier consiste à placer une feuille de matériau neutrophage entre chaque paroi de séparation des logements et une tôle rapportée par soudure sur cette paroi.

Dans cette configuration, la feuille de matériau neutrophage peut notamment être constituée par un polymère chargé avec du bore naturel. Un tel matériau est commercialisé sous la marque "Boraflex".

Les râteliers de stockage anciens équipés d'un tel matériau neutrophage présentent d'importants signes de vieillissement. Ce vieillissement est provoqué par la dissolution du matériau neutrophage dans l'eau borée de la piscine, lorsqu'il est soumis à un taux d'irradiation important engendré par les assemblages de combustible nucléaire, en milieu d'eau borée.

Cette dégradation du matériau neutrophage a pour première conséquence une diminution de la protection neutronique qu'il assurait initialement. Au-delà d'un certain temps d'utilisation, il n'est donc plus possible de conserver la densité de stockage initiale.

Par ailleurs, la dissolution du matériau neutrophage dans l'eau de la piscine a pour deuxième inconvénient de polluer de façon excessive l'eau du circuit de refroidissement. Au bout d'un certain temps d'utilisation, cette pollution atteint des limites non acceptables en conditions normales.

Lorsque cette situation se présente actuellement dans les râteliers de stockage équipés d'un tel matériau neutrophage, la seule solution connue consiste à remplacer l'ensemble du râtelier.

### Exposé de l'invention

L'invention a précisément pour objet un procédé conçu pour permettre la rénovation d'un râtelier de stockage dans lequel un matériau neutrophage, placé initialement entre les parois de séparation des logements et des tôles rapportées sur ces parois, s'est progressivement dissout dans l'eau de la piscine, sans qu'il soit nécessaire de remplacer en totalité le râtelier.

Conformément à l'invention, ce résultat est obtenu au moyen d'un procédé de rénovation d'un râtelier de stockage d'assemblages de combustible nucléaire, ce râtelier comprenant des logements juxtaposés délimités par des cloisons dont au moins certaines comprennent une feuille de matériau neutrophage, placée entre une paroi de séparation et une tôle rapportée par soudure sur cette paroi, le procédé étant caractérisé par le fait qu'il comprend les étapes suivantes :
- découpe des tôles à proximité de leurs soudures sur les parois ;
- enlèvement des feuilles de matériau neutrophage ; et
- mise en place de nouvelles plaques de matériau neutrophage contre les parois.

Dans une forme de réalisation préférée de l'invention, on découpe les tôles par jet d'eau. Cette technique a pour avantages de permettre une excellente maîtrise de la profondeur de découpe, de présenter une grande productivité, de ne pas polluer le râtelier, et de pouvoir être facilement adaptée aux différents types de râteliers existants, du fait de l'encombrement réduit des têtes de découpe par jet d'eau.

Afin de maîtriser au mieux la profondeur de découpe et, par conséquent, de ne pas altérer la paroi de séparation placée derrière la feuille de matériau neutrophage, on découpe de préférence les tôles en plusieurs passes.

A cet effet, il est possible soit d'effectuer des passes successives à l'aide d'une même buse de découpe par jet d'eau, soit d'effectuer des passes successives à l'aide d'un outil équipé de plusieurs buses de découpe par jet d'eau, agissant sur des profondeurs de plus en plus grandes.

Dans une autre forme de réalisation de l'invention, on découpe les tôles par burinage.

Dans tous les cas, une solution pour ne pas altérer la paroi de séparation consiste à n'effectuer qu'une découpe partielle, sur une partie de l'épaisseur de la tôle.

On effectue alors avantageusement deux découpes juxtaposées délimitant entre elles une languette de tôle que l'on retire par arrachement.

Dans la pratique, on peut notamment découper les tôles parallèlement à une direction longitudinale des logements à l'aide d'un premier outil et perpendiculairement à cet même direction à l'aide d'un deuxième outil.

Pour procéder à l'enlèvement des feuilles de matériau neutrophage, on peut utiliser selon le cas un outil racleur ou de traction, permettant de décoller les éventuels résidus de matériau neutrophage subsistant sur les parois de séparation.

Les nouvelles plaques de matériau neutrophage, telles que des plaques d'acier boré, peuvent notamment être fixées directement entre les parties restantes des tôles, après que celles-ci aient été découpées.

Si on le souhaite, il est également possible de faire précéder la mise en place des nouvelles plaques de matériau neutrophage d'un arasement des parties restantes des tôles, effectuée au moyen d'un outillage quelconque approprié tel qu'un outillage à jet d'eau.

### Brève description des dessins

On décrira à présent, à titre d'exemples non limitatifs, plusieurs formes de réalisation de l'invention, en se référant aux dessins annexés dans lesquels :
- la figure 1 est une vue de dessus qui représente schématiquement, en coupe horizontale, un exemple d'un râtelier de stockage susceptible d'être rénové par le procédé selon l'invention ;
- la figure 2 est une vue en perspective montrant la découpe des tôles à l'aide d'un outil équipé de plusieurs buses de découpe par jet d'eau ;
- la figure 3 est une vue en perspective illustrant deux exemples de découpe d'une tôle sur toute son épaisseur ;
- la figure 4 est une vue comparable à la figure 3, illustrant la découpe d'une tôle sur une partie de son épaisseur, selon deux lignes de découpe parallèles juxtaposées ;
- la figure 5 illustre un exemple de maintien des plaques neuves de matériau neutrophage dans un râtelier de stockage d'assemblages neufs ; et
- la figure 6 illustre un exemple de maintien des plaques neuves de matériau neutrophage dans un râtelier de stockage d'assemblages irradiés.

### Exposé détaillé de formes de réalisation préférentielles

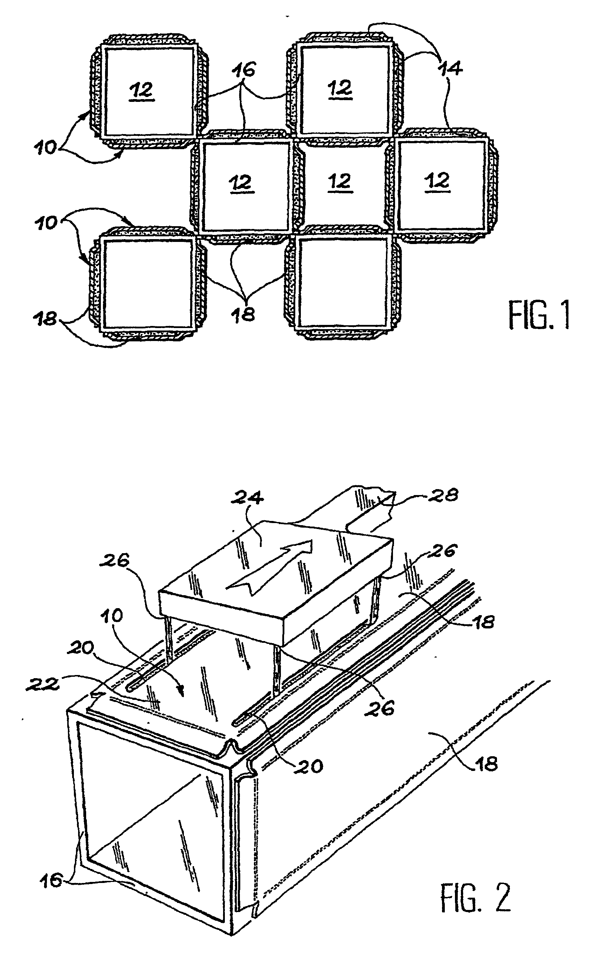

Sur la figure 1, on a représenté à titre d'exemple une petite partie d'un râtelier de stockage d'assemblages de combustible nucléaire, auquel peut être appliqué le procédé de rénovation conforme à l'invention.

Pour l'essentiel, ce râtelier comprend une structure rigide formée de cloisons verticales 10 sensiblement planes, qui délimitent entre elles des logements 12, de section carrée. Chacun de ces logements 12 est prévu pour pouvoir recevoir un assemblage de combustible nucléaire.

Chaque logement 12 présente un axe longitudinal perpendiculaire au plan de la figure 1. Cet axe est normalement orienté verticalement lorsque le râtelier est placé dans une piscine.

Comme on l'a représenté sur la figure 1, le procédé de rénovation selon l'invention concerne le cas où les cloisons 10 comprennent une feuille 14 de matériau neutrophage, placée entre une paroi de séparation 16 (par exemple de 2 à 3 mm d'épaisseur) et une tôle fine 18 (par exemple d'environ 0,8 mm) rapportée sur la paroi 16 par soudure.

Dans cet agencement, la paroi de séparation 16 forme la structure rigide de la cloison 10, qui assure la séparation physique entre les logements 12 voisins.

Dans l'exemple de réalisation illustré sur la figure 1, les parois de séparation 16 sont constituées par les faces d'un ensemble de tubes de section carrée, assemblés en quinconce au moyen de pattes de liaison soudées (non représentées).

Dans d'autres types de râteliers, auxquels le procédé de rénovation selon l'invention peut également s'appliquer, les parois de séparation 16 sont constituées par deux séries de plaques parallèles, disposées à angle droit l'une par rapport à l'autre, de façon à former les logements 12.

Dans l'exemple de réalisation illustré sur les figures 1 et 2, les feuilles 14 de matériau neutrophage sont placées sur les faces extérieures des tubes formant les parois de séparation 16. Toutefois, le montage des feuilles de matériau neutrophage peut être réalisé à l'inverse à l'intérieur des tubes formant les parois de séparation 16, ou de façon alternée à l'intérieur et à l'extérieur de ces tubes, sans sortir du cadre de l'invention.

De même, lorsque la structure rigide du râtelier est formée par un assemblage de plaques entrecroisées, le procédé de rénovation selon l'invention s'applique indifféremment, quelles que soient les faces de ces plaques sur lesquelles sont rapportées les feuilles de matériau neutrophage.

Les feuilles 14 de matériau neutrophage sont des feuilles de polymère chargé avec du bore naturel. Un matériau de ce type est connu sous la marque "Boraflex".

Les feuilles 14 de matériau neutrophage sont des feuilles rectangulaires dont les dimensions sont légèrement inférieures à celles des parois de séparation 16 sur lesquelles ces feuilles sont maintenues par les tôles 18. Ce dimensionnement permet de rabattre les rebords des tôles 18 contre les parois de séparation 16, au-delà des feuilles 14 de matériau neutrophage, afin de souder ces rebords sur les parois, pour assurer le maintien des feuilles de matériau neutrophage.

Comme l'illustre à plus grande échelle la figure 2, les tôles 18 sont rapportées par soudure sur les parois 16 de façon non étanche. Par conséquent, les feuilles 14 de matériau neutrophage sont en permanence en contact avec l'eau borée de la piscine.

Par hypothèse, le procédé de rénovation selon l'invention s'applique à un râtelier de stockage utilisé depuis plusieurs années, dans lequel les feuilles 14 de matériau neutrophage ont été soumises à un taux d'irradiation important dans l'eau borée de la piscine contenant le râtelier, pendant une période relativement longue. Les feuilles 14 de matériau neutrophage, en contact avec l'eau de la piscine, sont alors partiellement dissoutes dans celle-ci.

Cette dissolution a pour conséquences, d'une part, une diminution de la protection neutronique entre les logements 12 adjacents et, d'autre part, une pollution de l'eau du circuit de refroidissement de la piscine.

Actuellement, la seule solution pour remédier à ces problèmes de vieillissement consiste à remplacer l'ensemble du râtelier de stockage.

Conformément à l'invention, il est proposé de rénover le râtelier, après l'avoir sorti de la piscine et placé de préférence en position horizontale.

A cet effet, on procède tout d'abord à la découpe des tôles 18, à proximité de leur soudure sur les parois 16, afin de dégager les feuilles 14 de matériau neutrophage emprisonnées sous ces tôles 18.

Compte tenu de la forme rectangulaire allongée de chacune des cloisons 10, c'est-à-dire à la fois des feuilles 14 de matériau neutrophage, des parois de séparation 16 et des tôles 18, une découpe rectangulaire est réalisée selon deux lignes de découpe longitudinales 20 (figure 2) et selon deux lignes de découpe transversales (non représentées). Comme l'illustre la figure 2, les lignes de découpe longitudinale 20 s'étendent parallèlement à la direction longitudinale des logements 12 et sont aussi proches que possible des rebords longitudinaux de la tôle 18 soudée sur la paroi de séparation 16.

De façon comparable, les lignes de découpe transversales 22 sont orientées perpendiculairement à la direction longitudinale des logements 12 et aussi proches que possible des rebords d'extrémité soudés de la tôle 18. Ces lignes de soudure transversales 22 sont donc proches des extrémités haute et basse des râteliers.

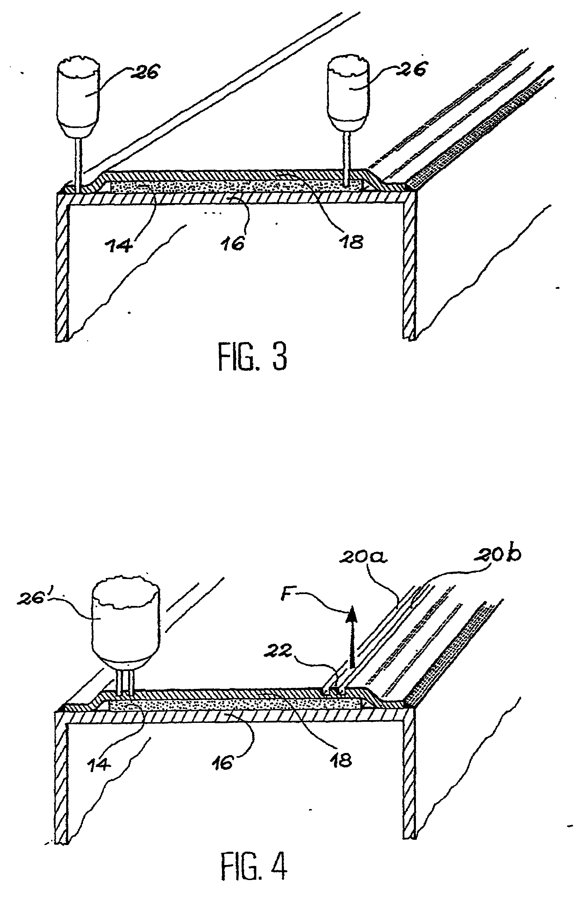

Plus précisément, comme on l'a représenté respectivement sur la gauche et sur la droite de la figure 3, la découpe de la tôle 18 peut être faite soit directement dans le rebord soudé sur la paroi 16, soit dans la partie de tôle 18 adjacente à ce rebord, mais écarté de la paroi 16 de l'épaisseur de la feuille 14. Cette dernière technique facilite la découpe de la tôle 18 sans risque d'endommager la paroi 16. En revanche, elle rend plus délicats l'enlèvement de la feuille 14 et la mise en place d'une nouvelle plaque de protection neutronique.

Les moyens utilisés pour effectuer la découpe des tôles 18 sont choisis afin de limiter les risques pour que les parois de séparation 16 soient endommagées lors de cette opération. A cet effet, on effectue avantageusement la découpe des tôles 18 par jet d'eau.

Dans une première forme de réalisation de l'invention, la découpe par jet d'eau est réalisée de préférence en plusieurs passes successives, afin que la profondeur de découpe soit parfaitement maîtrisée.

Ce résultat peut être obtenu à l'aide d'une même buse de découpe par jet d'eau, que l'on fait parcourir plusieurs fois la même trajectoire correspondant aux lignes de découpe 20 et 22.

Comme l'illustre schématiquement la figure 2, le même résultat peut être obtenu au moyen d'un outil 24 équipé de plusieurs buses de découpe 26 par jet d'eau. Sur la figure 2, on a représenté un outil 24 monté à l'extrémité d'un bras 28 qui se déplace parallèlement à l'axe longitudinal des alvéoles, de façon à réaliser chacune des lignes de découpe longitudinales 20 au moyen de deux paires de buses de découpe 26 par jet d'eau. Dans ce cas, un autre outil de découpe par jet d'eau (non représenté) est utilisé pour réaliser les lignes de découpe transversales. Il est à noter que le nombre des buses de découpe 26 utilisées pour réaliser chacune ligne de découpe 20 peut être supérieur à deux, si la précision de la profondeur de découpe l'exige.

Par ailleurs, l'outil 24 peut être réalisé de façon sensiblement différente. A titre d'exemple, il peut notamment s'agir d'un outil motorisé, guidé par un rail faisant toute la longueur du logement 12.

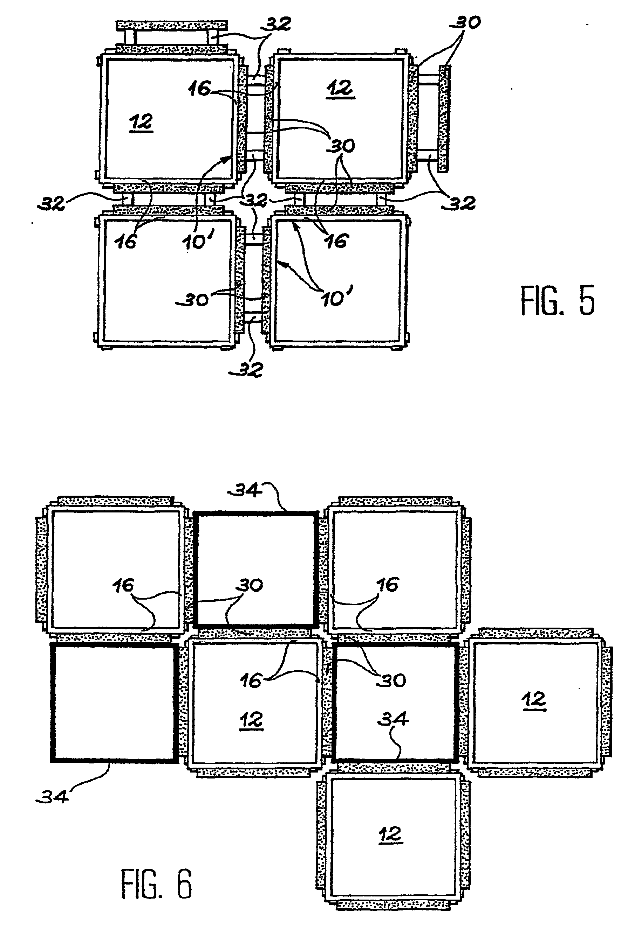

Dans une deuxième forme de réalisation, de l'invention, illustrée schématiquement sur la figure 4, au lieu d'être découpée sur toute son épaisseur, la tôle 18 n'est découpée que sur une partie de cette épaisseur.

Plus précisément, une buse 26' de découpe par jet d'eau effectue alors deux découpes parallèles juxtaposées, selon deux lignes de découpes telles que 20a et 20b sur la figure 4. La languette 22 de tôle 18 située entre ces deux lignes de découpe est ensuite enlevée par arrachement, comme le symbolise la flèche F.

Cette deuxième forme de réalisation de l'invention permet d'être certain que la paroi 16 reste intacte après la découpe de la tôle.

Il est à noter que l'utilisation de la technique de découpe par jet d'eau présente d'autres avantages que le contrôle précis de la profondeur de coupe. Parmi ces avantages, on relèvera une grande productivité, une absence de pollution du râtelier, qui est ensuite facilement nettoyable, et un encombrement réduit de la tête de découpe, lui permettant de s'adapter aux différents types de râteliers existants.

Après la découpe de la tôle 18, la partie découpée est enlevée, ce qui permet d'accéder à la feuille 14 de matériau neutrophage initialement placée sous cette tôle.

On procède ensuite à l'enlèvement de cette feuille 14 de matériau neutrophage. Cet enlèvement peut être réalisé au moyen de tout outillage approprié, tel qu'un outil racleur ou de traction. Les éventuels résidus de matériau neutrophage subsistant sur les parois de séparation 16 sont ainsi décollés.

De nouvelles plaques de matériau neutrophage, réalisées par exemple en acier boré, sont enfin mises en place sur les parois de séparation 16, afin de restituer au râtelier ses caractéristiques de protection neutronique d'origines.

Ces nouvelles plaques de matériau neutrophage sont, de préférence, placées dans le rectangle allongé délimité à l'intérieur des parties de rebords restantes des tôles 18. Leur fixation peut être assurée par des languettes rapportées (non représentées) soudées sur les parties de rebords restantes des tôles, ou par l'une des techniques qui vont à présent être décrites en référence aux figures 5 et 6, respectivement.

La figure 5 concerne le cas d'un râtelier destiné au stockage d'assemblages neufs. Dans ce cas, les logements 12 sont séparés par des cloisons 10' qui comprennent chacune deux parois de séparation 16 appartenant à deux tubes différents délimitant deux logements 12 adjacents. Les deux parois 16 d'une même cloison 10' sont alors séparées d'une distance suffisante pour que chacune d'entre elles ait été équipée initialement d'une feuille 14 de matériau neutronique, maintenue sur sa face extérieure par une tôle 18 soudée, comme décrit précédemment.

La figure 5 représente le râtelier après la découpe des tôles 18, l'enlèvement des feuilles 14 et le remplacement de celles-ci par des plaques neuves 30 de matériau neutrophage. Dans ce cas, le maintien des plaques 30 est assuré par des cales entretoises 32, insérées entre ces plaques.

La figure 6 concerne le cas d'un râtelier destiné au stockage d'assemblages usagés. Ce râtelier est analogue à celui qui a été décrit précédemment en référence à la figure 1. Il est représenté ici après découpe des tôles 18, enlèvement des feuilles 14 de matériau neutrophage, et remplacement de celles-ci par des plaques neuves 30 de matériau neutrophage. Dans ce cas, les plaques 30 sont maintenues par des tubes 34 de faible épaisseur (par exemple, 0,5 ou 0,8 mm) dans les logements 12 formés entre les tubes définissant les parois 16.

Si les caractéristiques des nouvelles plaques de matériau neutrophage l'exigent, leur mise en place peut être précédée d'une opération d'arasement des parties de rebords restantes des tôles 18. Cette opération d'arasement peut être effectuée à l'aide de tout outillage approprié, tel qu'un outillage à jet d'eau, un outillage de cisaillement, etc..

Les plaques de matériau neutrophage sont ensuite fixées sur les parois de séparation 16 ainsi aplanies, par l'un quelconque des moyens décrits précédemment.

Il est à noter que la nature des nouvelles plaques de matériau neutrophage qui sont mises en place dans le râtelier peut être quelconque, selon le type de râtelier concerné.

Lorsque la rénovation du râtelier est terminée, celui-ci peut être à nouveau utilisé dans des conditions analogues à celles qui préside à l'utilisation d'un râtelier neuf. Toutefois, le coût de la rénovation est sensiblement inférieur à celui qu'impose le remplacement complet du râtelier.

Dans une autre forme de réalisation de l'invention, la découpe totale ou partielle des tôles 18 est réalisée par burinage.

## Revendications

1. Procédé de rénovation d'un râtelier de stockage d'assemblages de combustible nucléaire, ce râtelier comprenant des logements (12) juxtaposés délimités par des cloisons (10) dont au moins certaines comprennent une feuille (14) dé matériau neutrophage, placée entre une paroi de séparation (16) et une tôle (18) rapportée par soudure sur cette paroi, le procédé étant **caractérisé par le fait qu'**il comprend les étapes suivantes :
- découpe des tôles (18) à proximité de leurs soudures sur les parois (16) ;
- enlèvement des feuilles (14) de matériau neutrophage ; et
- mise en place de nouvelles plaques de matériau neutrophage contre les parois (16).

2. Procédé selon la revendication 1, dans lequel on découpe les tôles (18) par jet d'eau.

3. Procédé selon la revendication 2, dans lequel on découpe les tôles (18) en plusieurs passes.

4. Procédé selon la revendication 3, dans lequel on effectue des passes successives à l'aide d'une même buse de découpe par jet d'eau.

5. Procédé selon la revendication 3, dans lequel on effectue des passes successives à l'aide d'un outil (24) équipé de plusieurs buses (26) de découpe par jet d'eau.

6. Procédé selon la revendication 1, dans lequel on découpe les tôles (18) par burinage.

7. Procédé selon l'une quelconque des revendications 2 et 6, dans lequel on découpe les tôles (18) sur une partie de leur épaisseur.

8. Procédé selon la revendication 7, dans lequel on effectue deux découpes juxtaposées, délimitant entre elles une languette de tôle, et on retire cette languette par arrachement.

9. Procédé selon l'une quelconque des revendications précédentes, dans lequel on découpe les tôles (18) parallèlement à une direction longitudinale des logements (12) à l'aide d'un premier outil (24) et perpendiculairement à cette direction à l'aide d'un deuxième outil.

10. Procédé selon l'une quelconque des revendications précédentes, dans lequel on enlève les feuilles (14) de matériau neutrophage au moyen d'un outil racleur ou de traction.

11. Procédé selon l'une quelconque des revendications précédentes, dans lequel on arase les parties restantes des tôles (18), avant de mettre en place les nouvelles plaques de matériau neutrophage.

12. Procédé selon la revendication 11, dans lequel on arase les parties restantes des tôles (18) au moyen d'un outillage à jet d'eau.

13. Procédé selon l'une quelconque des revendications 1 à 10, dans lequel on fixe les nouvelles plaques de matériau neutrophage entre les parties restantes des tôles (18).

## Patentansprüche

1. Verfahren zur Wiederherstellung eines Lagergestells für Kembrennstabbündel, wobei dieses Gestell Aufnahmen (12) umfasst, nebeneinander und abgegrenzt durch Wände (10), von denen wenigstens einige eine Platte (14) aus neutrophagem Material umfassen, angeordnet zwischen einer Trennwand (16) und einem Blech (18), das mittels Schweißnähten bzw. -stellen an dieser Wand befestigt ist,
**dadurch gekennzeichnet,**
**dass** es die folgenden Schritte umfasst:
- Durchschneiden der Bleche (18) in der Nähe ihrer Schweißverbindung mit den Wänden (16);
- Herausnehmen der Platte (14) aus neutrophagem Material; und
- Anbringen neuer Platten aus neutrophagem Material auf den Wänden (16).

2. Verfahren nach Anspruch 1, bei dem man die Bleche (18) mit einem Wasserstrahl durchschneidet.

3. Verfahren nach Anspruch 2, bei dem man die Bleche (18) in mehreren Durchgängen durchschneidet.

4. Verfahren nach Anspruch 3, bei dem man aufeinanderfolgende Durchgänge mit Hilfe einer selben Wasserstrahl-Schneiddüse ausführt.

5. Verfahren nach Anspruch 3, bei dem man aufeinanderfolgende Durchgänge mit Hilfe eines Werkzeugs (24) ausführt, das mit mehreren Wasserstrahl-Schneiddüsen (26) ausgerüstet ist.

6. Verfahren nach Anspruch 1, bei dem man die Bleche (18) mit dem Meißel durchschneidet.

7. Verfahren nach einem der Ansprüche 2 und 6, bei dem man die Bleche (18) über einen Teil ihrer Dicke durchschneidet.

8. Verfahren nach Anspruch 7, bei dem man zwei Schnitte nebeneinander ausführt, die zwischen sich eine Blechzunge abgrenzen, und man diese Blechzunge anschließend entfernt, indem man sie herausreißt.

9. Verfahren nach einem der vorangehenden Ansprüche, bei dem man die Bleche (18) parallel zu einer Längsrichtung der Aufnahmen (12) mit Hilfe eines ersten Werkzeugs (24) und senkrecht zu dieser Richtung mit Hilfe eines zweiten Werkzeugs durchschneidet.

10. Verfahren nach einem der vorangehenden Ansprüche, bei man die Platten (14) aus neutrophagem Material mit Hilfe eines Schab- bzw. Kratz- oder Ziehwerkzeugs entfernt.

11. Verfahren nach einem der vorangehenden Ansprüche, bei dem man die noch vorhandenen Teile der Bleche (18) nachschneidet, ehe man die neuen Platten aus neutrophagem Material anbringt.

12. Verfahren nach Anspruch 11, bei dem man die noch vorhandenen Teile der Bleche (18) mit einem Wasserstrahlgerät nachschneidet.

13. Verfahren nach einem der Ansprüche 1 bis 10, bei dem man die neuen Platen aus neutrophagem Material zwischen den noch vorhandenen Teilen der Bleche (18) befestigt.

## Claims

1. Process for the renovation of a nuclear fuel assembly storage rack, which comprises juxaposed cells (12) defined by bulkheads (10), whereof at least some have a neutrophage material sheet (14) placed between a partition (16) and a plate (18) joined by welding to said partition, the process comprising the following stages:
- cutting the plates (18) in the vicinity of their welds to the partitions (16),
- removal of the neutrophage material sheets (14) and
- putting into place of new neutrophage material sheets against the partitions (16).

2. Process according to claim 1, wherein the plates (18) are cut by water jet.

3. Process according to claim 2, wherein the plates (16) are cut in several passes.

4. Process according to claim 3, wherein successive passes are performed with the aid of the same water jet cutting nozzle.

5. Process according to claim 3, wherein successive passes are performed with the aid of a tool (24) equipped with several water jet cutting nozzles (26).

6. Process according to claim 1, wherein the plates (18) are cut by chiselling or chipping.

7. Process according to either of the claims 2 and 6, wherein the plates (18) are cut over a portion of their thickness.

8. Process according to claim 7, wherein two juxtaposed cuts are made, defining between them a plate tongue and the latter is removed by pulling off.

9. Process according to any one of the preceding claims, wherein the plates (18) are cut parallel to a longitudinal direction of the cells (12) with the aid of a first tool (24) and perpendicular to said direction with the aid of a second tool.

10. Process according to any one of the preceding claims, wherein the neutrophage material sheets (14) are removed by means of a pulling or scraping tool.

11. Process according to any one of the preceding claims, wherein the residual plate portions (18) are cut off before the new neutrophage material sheets are put into place.

12. Process according to claim 11, wherein the residual plate portions (18) are cut off by means of a water jet tool.

13. Process according to any one of the claims 1 to 10, wherein the new neutrophage material sheets are fixed between the residual portions of the plates (18).
